Europäisches Patentamt
European Patent Office
Office européen des brevets

(19)

(11) Veröffentlichungsnummer: **0 453 821 A2**

(12) **EUROPÄISCHE PATENTANMELDUNG**

(21) Anmeldenummer: **91105131.6**

(51) Int. Cl.5: **C08K 5/55**, C07F 5/04

(22) Anmeldetag: **30.03.91**

(30) Priorität: **24.04.90 AT 945/90**

(43) Veröffentlichungstag der Anmeldung:
**30.10.91 Patentblatt 91/44**

(84) Benannte Vertragsstaaten:
**AT BE CH DE DK ES FR GB GR IT LI LU NL SE**

(71) Anmelder: **Chemie Linz Gesellschaft m.b.H.**
**St.Peter-Strasse 25**
**A-4021 Linz(AT)**

(72) Erfinder: **Horacek, Heinrich, Dr.**
**Bockgasse 43**
**A-4020 Linz(AT)**

(74) Vertreter: **Kunz, Ekkehard, Dr.**
**Chemie Holding AG Patentwesen St. Peter-Strasse 25**
**A-4021 Linz(AT)**

(54) **Verwendung von spirocyclischen Borsäureestern als Flammhemmer in Kunststoffen.**

(57) Verwendung von spirocyclischen Borsäureestern der allgemeinen Formel

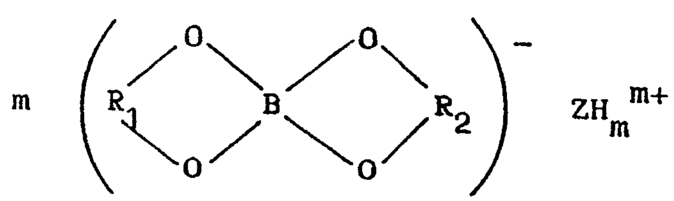

I

als Flammhemmer für Kunststoffe. $R_1$ und $R_2$ stehen entweder unabhängig voneinander für 2-wertige Reste von Alkoholen mit 2 bis 6 OH-Gruppen oder gemeinsam für den vierwertigen Rest von Pentaerythrit, Z für eine N-Base und m für eine ganze Zahl von 1 bis 3.

EP 0 453 821 A2

Die Erfindung betrifft die Verwendung von spirocyclischen Borsäureestern mit Alkoholen mit 2 bis 6 OH-Gruppen und N-hältigen Basen als Flammhemmer für Kunststoffe, mit diesen Borsäureestern flammhemmend ausgerüstete Kunststoffe, sowie spirocyclische Borsäureester mit Pentaerythrit, Pentiten oder Hexiten und Guanidin-, Piperazin- oder Melaminkationen.

Aus der EP-B1-0 005 497 ist es bekannt, halogenhältige, spirocyclische Borsäureester als flammhemmende Zusätze für Kunststoffe zu verwenden. Es wird dabei zwar ein guter Flammschutz erreicht, der Nachteil dieser Flammhemmer liegt jedoch insbesondere in ihrem Halogengehalt, wodurch aus den flammhemmend ausgerüsteten Kunststoffen im Falle eines längeren Brandes toxische Chlor- und Bromverbindungen freigesetzt werden.

Halogenfreie spirocyclische Borverbindungen, die jedoch nicht als Flammschutzmittel verwendet werden, sind bereits bekannt. So wird z. B. in der US 2 497 521 durch Erhitzen von Borsäure und Äthylenglykol eine Borsäure-Äthylenglykol-Komplexverbindung hergestellt und isoliert, die nach Erhitzen mit einem Amin das entsprechende Aminsalz der Spiroborverbindung ergibt. Borsäure und Äthylenglykol werden in einem 30%igen Überschuß eingesetzt. Auf diese Weise wurde eine Reihe von Verbindungen hergestellt, die die Lagerfähigkeit und Korrosionsbeständigkeit von Ölen auf Kohlenwasserstoffbasis erhöhen. In US 3 635 848 sind Na-Salze von Spiroborsäureestern beschrieben, die durch Erhitzen von Borsäure mit einem großen Überschuß eines Glykols unter Abdestillieren des gebildeten Wassers im Vakuum und anschließendes Erhitzen des Reaktionsproduktes mit metallischem Natrium hergestellt wurden. Diese Verbindungen eignen sich als Katalysatoren zur Herstellung von Polyurethanen, Polyisocyanuraten, zur Trimerisierung von Isocyanaten udgl. Laut US 3 772 357 werden durch Umsatz von 2 Molen eines vicinalen Glykols, das mehr als 2 OH-Gruppen besitzt, mit 1 Mol Bosäure und durch anschließende Veresterung der freien OH-Gruppen mit einer Carbonsäure, welche 8 - 22 C-Atome besitzt, spirocyclische Borverbindungen erhalten, welche oberflächenaktiv und antistatisch wirken, und die Hitzebeständigkeit von Kunstharzen erhöhen.

Die Aufgabe der vorliegenden Erfindung war es, halogenfreie Flammhemmer mit einer guten flammschützenden Wirkung für Kunststoffe zu finden.

Die Lösung der Aufgabe wurde in spirocyclischen Borsäureestern gefunden, die das Kation einer N-Base enthalten.

Gegenstand der Erfindung ist demnach die Verwendung von spirocyclischen Borsäureestern der allgemeinen Formel I,

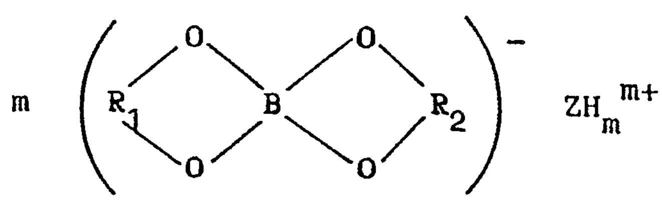

I

worin $R_1$ und $R_2$ entweder unabhängig voneinander zweiwertige Reste von Alkoholen mit 2 bis 6 OH-Gruppen oder gemeinsam den vierwertigen Rest von Pentaerythrit, Z eine N-Base und m eine ganze Zahl von 1 bis 3 bedeuten, als Flammhemmer für Kunststoffe.

Als Alkohole mit 2 bis 6 OH-Gruppen kommen sowohl aliphatische als auch aromatische Polyhydroxyalkohole, wie sie beispielsweise in der US 2,497,521 oder US 3,087,960, in der ähnliche Borsäureester als Schmiermittel, Transformatorenöle oder als Zwischenprodukte zur Herstellung von Benzinzusatzmitteln verwendet werden, beschrieben sind. Beispiele für Polyhydroxyalkohole sind Glykole wie z. B. Ethylenglykol, Propylenglykol, Butylenglykol, Diethylenglykol, Dipropylenglykol, Thiodiglykol, Butandiol, Pentandiol, Hexandiol, 2,2,-Dimethyl-1,3-propandiol (Neopentylglykol), 2,2,4-Trimethyl-1,3-pentandiol, Cyclohexandimethanol oder 2,2,4,4-Tetramethyl-1,3-cyclobutandiol, Glycerin, Erythrit, Pentaerythrit, Zuckeralkohole wie z. B. Pentite, beispielsweise Arabit oder Xylit oder Hexite, beispielsweise Sorbit oder Mannit, Brenzcatechin, Resorcin, Hydrochinon, Naphthohydrochinon oder Dihydroxybiphenyl. Bevorzugte Alkohole sind Neopentylglykol, Pentite und Hexite.

Als N-Basen Z bzw. deren Kationen $ZH_m^{m+}$ kommen beispielsweise Ammonium-, Mono-, Di-, Tri- und Tetraalkylammonium-, Cycloalkylammonium-, Arylammonium- oder Aralkylammoniumionen, sowie die Kationen des Ethylendiamins, Guanidins, Melamins, Piperazins oder Dicyandiamids in Frage. Bevorzugte N-Basen sind Guanidin und Melamin. Die Kationen der N-Basen kommen durch Anlagerung von $H^+$ Ionen an die N-Atome der N-Basen zustande. Beispielsweise ist im Falle der unsubstituierten oder substituierten

Ammoniumionen m = 1, durch Anlagerung von $1H^+$ an Ammoniak bzw. an das entsprechende Amin entsteht das entsprechende Ammoniumion. Beim Ethylendiamin beispielsweise kann m = 1 oder 2 sein, je nachdem ob 1 oder $2H^+$ angelagert werden, das heißt, je nachdem ob 1 Mol Ethylendiamin mit 1 oder 2 Mol Borsäure und 2 oder 4 Mol Alkohol umgesetzt werden. Beim Melamin beispielsweise kann m die Werte 1, 2 oder 3 annehmen, dementsprechend können 1,2 oder $3H^+$ an 1, 2 oder $3NH_2$-Gruppen angelagert werden.

Die erfindungsgemäßen Flammhemmer werden bevorzugt zur flammhemmenden Ausrüstung von Polyolefinen und Polyurethanen verwendet.

Die erfindungsgemäßen Flammhemmer können für sich allein oder gemeinsam mit anderen Flammhemmern verwendet werden. Vorteilhaft werden sie bei der flammhemmenden Ausrüstung von Polyolefinen gemeinsam mit Ammoniumpolyphosphat, sowie bei der flammhemmenden Ausrüstung von Polyurethanen gemeinsam mit Melamin eingesetzt.

Ein weiterer Gegenstand der Erfindung sind flammhemmend ausgerüstete Kunststoffe, die bevorzugt 5 bis 50 Gew.% der erfindungsgemäßen spirocyclischen Borsäureester als Flammhemmer enthalten.

Ein weiterer Gegenstand der Erfindung sind neue spirocyclische Borsäureester der allgemeinen Formel I, worin $R_1$ und $R_2$ entweder unabhängig voneinander zweiwertige Reste von Pentiten oder Hexiten oder gemeinsam den vierwertigen Rest von Pentaerythrit, Z Guanidin, Piperazin oder Melamin und m eine ganze Zahl von 1 bis 3 bedeuten.

Neben der guten flammhemmenden Wirkung liegt ein weiterer Vorteil der erfindungsgemäßen Flammhemmer darin, daß sie hohe Siede- bzw. Zersetzungspunkte im Bereich von etwa 260 - 360°C besitzen, wodurch sie auch bei hohen Temperaturen in die flammhemmend auszurüstenden Kunststoffe eingearbeitet werden können. Dies ist vor allem bei Thermoplasten von Vorteil, bei denen der Flammhemmer üblicherweise in der Schmelze, beispielsweise auf einem Extruder, eingearbeitet wird.

Entsprechend dem geforderten Brandschutz bzw. der Brandschutzklasse werden den flammfest auszurüstenden Kunststoffen bevorzugt 5 bis 50 Gew.% der erfindungsgemäßen Borsäureester, bezogen auf den flammfest ausgerüsteten Kunststoff, zugesetzt. Die flammhemmende Wirkung kann durch Zusatz von Synergisten, beispielsweise organische oder anorgansiche Phosphorverbindungen, wie z. B. Ammoniumpolyphosphat oder Phosphorsäureester, oder Metalloxide, wie z. B. Antimonoxid, noch verstärkt werden.

Die Herstellung der erfindungsgemäßen Flammhemmer erfolgt durch Umsetzung von 1 Mol Borsäure, wenn $R_1$ gleich $R_2$ ist mit 2 Molen eines Alkohols der allgemeinen Formel $R_1(OH)_n$, wenn $R_1$ ungleich $R_2$ ist, mit 1 Mol dieses Alkohols und anschließend mit 1 Mol eines Alkohols der allgemeinen Formel $R_2(OH)_n$, wobei $R_1$ und $R_2$ wie oben definiert sind und n eine ganze Zahl von 2 bis 6 darstellt, wenn $R_1$ und $R_2$ gemeinsam den vierwertigen Rest von Pentaerythrit darstellen, mit 1 Mol Pentaerythrit, in Gegenwart von mindestens 1 Äquivalent einer N-Base oder deren Salzes bei einer Temperatur von 20 bis 200°C in einem Verdünnungsmittel. Im Falle von 1-säurigen N-Basen, beispielsweise von Monoaminderivaten, wird mindestens 1 Mol der N-Base, im Falle von 2-säurigen N-Basen, beispielsweise Ethylendiamin, mindestens 1/2 Mol und im Falle von 3-säurigen N-Basen, beispielsweise Melamin, mindestens 1/3 Mol der N-Base verwendet.

Anstelle von Borsäure können auch deren dehydratisierte Formen, wie z.B. Metaborsäure oder Bortrioxid verwendet werden. Üblicherweise setzt man zuerst die Borsäure mit den Alkoholen um und setzt anschließend die N-Base bzw. deren Salz zu, wodurch der zunächst gebildete Borsäureester aus der Säureform in die Salzform übergeführt wird. Als Salz einer N-Base wird bevorzugt Guanidincarbonat zugesetzt, wobei der Borsäureester unter $CO_2$-Entwicklung in das Guanidiniumsalz übergeführt wird. Als Verdünnungsmittel können beispielsweise Wasser, Methanol, Ethanol, Toluol oder Xylol verwendet werden. Die Umsetzungstemperatur liegt bevorzugt bei 50 bis 150°C.

Beispiel 1:

In einem Dreihalskolben mit Rührer, Rückflußkühler und Thermometer wurden 360 ml Ethanol, 14,8 g (0,24 Mol) Borsäure und 50 g (0,48 Mol) Neopentylglykol vorgelegt und zwei Stunden am Rückfluß gekocht. Anschließend wurde auf 65 °C abgekühlt und langsam 21,6 g (0,12 Mol) Guanidincarbonat zugegeben. Unter $CO_2$-Abspaltung und Bildung eines weißen Niederschlages wurde weitere zwei Stunden am Rückfluß gekocht, der Niederschlag nach Abkühlen auf Raumtemperatur abgesaugt und bei 70°C getrocknet. Der Sublimationspunkt des erhaltenen Produktes (Guanidiniumdineopentylglykolborsäureester) beträgt 275 - 285°C.

| Elementaranalyse: | % C | % H | % N |
|---|---|---|---|
| theoretisch | 48,0 | 9,5 | 15,3 |
| experimentell | 47,7 | 9,5 | 15,6 |

Beispiel 2:

In einem Dreihalskolben mit Rührer, Rückflußkühler und Thermometer wurden 182,2 g (1 Mol) Mannit, 30,9 g Borsäure (0,5 Mol) und 750 ml destilliertes Wasser 2 Stunden am Rückfluß gekocht. Anschließend wurde eingedampft, wobei 213 g Dimannitborsäure mit einem Schmelzpunkt von 148 °C erhalten wurden.

| Elementaranalyse: | %C | %H | %B |
|---|---|---|---|
| theoretisch | 38,7 | 6,7 | 3,0 |
| experimentell | 38,5 | 6,5 | 3,1 |

Anschließend wurden 30 g (0,08 Mol) der erhaltenen Dimannitborsäure, 7,26 g (0,04 Mol) Guanidincarbonat und 85 ml Ethanol in einem 500 ml-Kolben zum Sieden gebracht. Nach 5 Stunden Kochen wurde die Lösung im Rotavapor eingeengt und auf Raumtemperatur abgekühlt, wobei ein Niederschlag von Guanidiniumdimannitborsäureester mit einem Schmelzpunkt von 175 °C erhalten wurde.

| Elementaranalyse: | %C | %H | %N |
|---|---|---|---|
| theoretisch | 36,2 | 7,0 | 9,7 |
| experimentell | 35,8 | 7,5 | 10,2 |

Beispiel 3:

In einem 2 1-Kolben mit Rührer, Thermometer und Kühler wurden 136,2 g (1 Mol) Pentaerythrit in 862,5 g Ethanol vorgelegt und auf Siedetemperatur (79 °C) aufgeheizt. Sobald die Lösung klar war, wurden 61,8 g (1 Mol) Borsäure zugegeben, weitere 2 Stunden auf Siedetemperatur gehalten und anschließend 90,1 g (0,5 Mol) Guanidincarbonat zugesetzt. Nach dem Ende der $CO_2$-Entwicklung wurde auf Raumtemperatur abgekühlt. Der gebildete Niederschlag (Guanidiniumpentaerythritylborsäureester) hatte einen Schmelzpunkt von 375 °C.

| Elementaranalyse: | %C | %H | %N |
|---|---|---|---|
| theoretisch | 35,5 | 7,0 | 20,7 |
| experimentell | 35,3 | 7,1 | 21,0 |

Beispiel 4:

In einem 500 ml Vierhalskolben wurden 20,0 g (0,0925 Mol) Dineopentylglykolatborsäure, die analog zu Beispiel 1 durch Umsetzen von Borsäure und Neopentylglykol in Ethanol und anschließendem Abziehen von Ethanol und Wasser erhalten wurde, in 93 ml Ethanol gelöst und 11,7 g (0,0925 Mol) Melamin

zugegeben. Nach 5 Stunden Kochen am Rückfluß bei 78 °C wurde ein Teil des Lösungsmittels abgezogen, wobei Melamin-Dineopentylglykolborsäureester mit einem Schmelzpunkt von 285 °C auskristallisierte.

| Elementaranalyse: | %C | %H | %N |
|---|---|---|---|
| theoretisch | 45,6 | 7,9 | 24,6 |
| experimentell | 45,3 | 7,5 | 25,0 |

Beispiel 5:

30 g (0,08 Mol) Dimannitborsäure, die gemäß Beispiel 2 erhalten wurde, wurden mit 10,2 g (0,08 Mol) Melamin in 85 ml Wasser während 6 Stunden am Rückfluß gekocht. Anschließend wurde auf dem Rotavapor eingedampft, wobei Melamin-Dimannitborsäureester mit einem Schmelzpunkt von 160 °C erhalten wurde.

| Elementaranalyse: | %C | %H | %N |
|---|---|---|---|
| theoretisch | 36,1 | 6,2 | 16,9 |
| experimentell | 35,8 | 6,6 | 18,4 |

Beispiel 6:

In einem Rundkolben wurden 34 g (0,25 Mol) Pentaerythrit, 15,5 g (0,25 mol) Borsäure und 150 g Ethanol zum Sieden erhitzt und unter Rühren 1 Stunde auf Siedetemperatur gehalten. Anschließend wurden 31,5 g (0,25 Mol) Melamin zugegeben und weitere 5 Stunden am Rückfluß gekocht. Nach dem Einengen der Lösung erhielt man einen Niederschlag von Melamin-Pentaerythritylborsäureester mit einer Zersetzungstemperatur von 400 °C.

| Elementaranalyse: | %C | %H | %N |
|---|---|---|---|
| theoretisch | 35,6 | 5,6 | 31,1 |
| experimentell | 35,5 | 6,0 | 31,8 |

Beispiel 7:

In einem Rundkolben wurden 34 g (0,25 Mol) Pentaerythrit, 15,5 g (0,25 Mol) Borsäure und 150 g Ethanol zum Sieden gebracht und unter Rühren eine Stunde auf Siedetemperatur gehalten. Anschließend wurden 21 g (0,25 Mol) Piperazin zugegeben und weitere 5 Stunden unter Rückfluß gekocht. Nach dem Eindampfen der Lösung erhielt man einen Rückstand von Piperazin-Pentaerythritylborsäureester mit einem Schmelzpunkt von 350 °C.

| Elementaranalyse: | %C | %H | %N |
|---|---|---|---|
| theoretisch | 47,3 | 7,5 | 12,3 |
| experimentell | 47,2 | 7,6 | 12,1 |

Beispiel 8:

In einem Rundkolben wurden 34 g (0,25 Mol) Pentaerythrit, 15,5 g (0,25 Mol) Borsäure und 150 g Ethanol zum Sieden gebracht und unter Rühren eine Stunde auf Siedetemperataur gehalten. Anschließend wurden 15 g (0,25 Mol) Ethylendiamin zugegeben und weitere 6 Stunden unter Rückfluß gekocht. Nach dem Eindampfen der Lösung erhielt man einen Rückstand von Ethylendiamin-Pentaerythritylborsäureester mit einem Schmelzpunkt von 320 °C.

| Elementaranalyse: | %C | %H | %N |
|---|---|---|---|
| theoretisch | 41,2 | 8,3 | 13,7 |
| experimentell | 41,4 | 8,1 | 13,9 |

Beispiel 9:

Um die gute flammhemmende Wirkung der erfindungsgemäßen Flammhemmer aufzuzeigen, wurden Polyurethanweichschaumstoffe mit einem Raumgewicht von 21 kg/m³ mit jeweils 10 Gew.% der Flammhemmer gemäß den Beispielen 1 bis 6 und 10 Gew.% Melamin, sowie als Vergleich mit 20 Gew.% Melamin als Flammhemmer gemäß folgender Rezeptur hergestellt:
71,5 Gew.Teile Polyol (Polyurax 1408, Dow), 14 Gew.Teile Melamin (Chemie Linz), 14 Gew.Teile des jeweiligen Flammhemmers, 2,9 Gew.Teile Wasser, 1,4 Gew.Teile Diethanolamin 88 % als Vernetzer, 0,07 Gew.Teile Dabco 33LV (33 % Lösung von Triethylendiamin in Dipropylenglycol, Fa. Air Products), 0,036 Gew.Teile Niax Al (Fa UCC) und 0,07 Gew.Teile Dibutylzinndilaurat als Katalysatoren und 0,18 Gew.Teile Polyurax SH209 (DOW) als Schaumstabilisator wurden homogenisiert und anschließend mit 36,5 Gew.Teilen Toluylidendiisocyanat (TDI 80, Bayer) verschäumt. Die erhaltenen Polyurethanschäume (Combustion Modified High Resilient Foam, Index 106 ) wurden gemäß BS (British Standard) 5852 Crib 5 auf ihr Brandverhalten geprüft, wobei bei einer Beflammung von etwa 1 kg des Schaumstoffes ein maximaler Gewichtsverlust von 60 g zulässig ist. Die Werte des Brandverhaltens der verschiedenen Polyurethanschäume sind in Tabelle 1 zusammengestellt, wobei FH1 bis FH6 die gemäß den Beispielen 1 bis 6 hergestellten Flammhemmer bedeuten.

Tabelle 1

Brandverhalten von flammhemmend ausgerüsteten Polyurethanschäumen gemäß BS 5852 Crib 5

| Flammhemmer* | Gew.% | Probengewicht (g) | Gewichtsverlust (g) |
|---|---|---|---|
| Melamin | 20 | 1000 | 50 |
| FH1 + Melamin | 10 + 10 | 990 | 20 |
| FH2 + Melamin | 10 + 10 | 1020 | 30 |
| FH3 + Melamin | 10 + 10 | 1050 | 25 |
| FH4 + Melamin | 10 + 10 | 980 | 30 |
| FH5 + Melamin | 10 + 10 | 1010 | 40 |
| FH6 + Melamin | 10 + 10 | 1030 | 40 |

*FH1 bis FH6: Flammhemmer gemäß Beispiel 1 bis 6

Beispiel 10:

Zur Prüfung der flammhemmenden Wirkung der erfindungsgemäßen Flammhemmer in Polypropylen wurden die Flammhemmer gemäß den Beispielen 1 bis 6 (FH1 bis FH6) jeweils mit Ammoniumpolyphosphat (Exolit 422, Hoechst Celanese) im Verhältnis 35 Gew.% des jeweiligen FH und 65 Gew.% Ammoniumpolyphosphat gemischt und das Gemisch in einer Menge von 25 Gew.% auf einem Labor-Einschneckenextruder bei einer Schmelzetemperatur von 220 °C in Polypropylen (Daplen RT 58 von Fa. PCD, Wien) eingearbeitet und anschließend zu 3,2 mm dicken Probenplatten verpreßt. Für einen Vergleichsversuch wurden 34 Gew.% Masterflam AF 709, ein Flammhemmer der Fa. Vamp (Italien) auf Basis von Stickstoff und Phosphor, in das Polypropylen eingearbeitet und zu 3,2 mm dicken Platten extrudiert. Die flammhemmend ausgerüsteten Polypropylenplatten wurden gemäß UL 94 (Underwriters Laboratories) auf ihr Brandverhalten untersucht. Die entsprechenden Werte sind in Tabelle 2 zusammengestellt, wobei VO eine maximale Brenndauer von 10 sec ohne Nachbrennen und Nachglühen, V2 eine maximale Nachbrennzeit von 30 sec bedeuten.

Tabelle 2

Brandverhalten von flammhemmend ausgerüstetem Polypropylen gemäß UL 94

| Flammhemmer | Gew.% | Brandverhalten (UL 94) |
|---|---|---|
| Masterflam AF 709 | 34 | VO |
| 35 % FH1 + 65 % Ammoniumpolyphosphat | 25 | VO |
| 35 % FH2 + 65 % Ammoniumpolyphosphat | 25 | V2 |
| 35 % FH3 + 65 % Ammoniumpolyphosphat | 25 | VO |
| 35 % FH4 + 65 % Ammoniumpolyphosphat | 25 | VO |
| 35 % FH5 + 65 % Ammoniumpolyphosphat | 25 | V2 |
| 35 % FH6 + 65 % Ammoniumpolyphosphat | 25 | VO |

## Patentansprüche

1. Verwendung von spirocyclischen Borsäureestern der allgemeinen Formel I

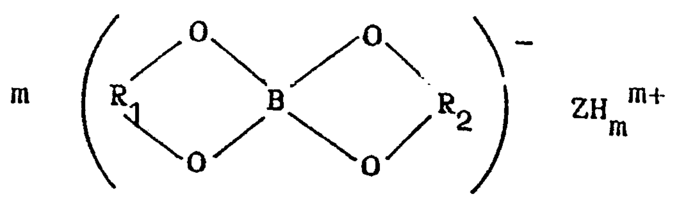

I

worin $R_1$ und $R_2$ entweder unabhängig voneinander zweiwertige Reste von Alkoholen mit 2 bis 6 OH-Gruppen oder gemeinsam den vierwertigen Rest von Pentaerythrit, Z eine N-Base und m eine ganze Zahl von 1 bis 3 bedeuten, als Flammhemmer für Kunststoffe.

2. Verwendung von Borsäureestern gemäß Anspruch 1, dadurch gekennzeichnet, daß als Alkohole Pentite oder Hexite vorliegen.

3. Verwendung von Borsäureestern gemäß Anspruch 1, dadurch gekennzeichnet, daß als Alkohol Neopentylglykol vorliegt.

4. Verwendung von Borsäureestern gemäß einem der Ansprüche 1 bis 3, dadurch gekennzeichnet, daß die N-Base Guanidin ist.

5. Verwendung von Borsäureestern gemäß einem der Ansprüche 1 bis 3, dadurch gekennzeichnet, daß die N-Base Melamin ist.

6. Verwendung von Borsäureestern gemäß einem der Ansprüche 1 bis 5 als Flammhemmer für Polyolefine oder Polyurethane.

7. Verwendung von Borsäureestern gemäß Anspruch 6 als Flammhemmer für Polyolefine, dadurch gekennzeichnet, daß sie gemeinsam mit Ammoniumpolyphosphat als zusätzlichen Flammhemmer eingesetzt werden.

8. Verwendung von Borsäureestern gemäß Anspruch 6 als Flammhemmer für Polyurethane, dadurch

gekennzeichnet, daß sie gemeinsam mit Melamin als zusätzlichen Flammhemmer eingesetzt werden.

**9.** Flammhemmend ausgerüsteter Kunststoff, dadurch gekennzeichnet, daß er 5 bis 50 Gew.% des Borsäureesters der allgemeinen Formel I gemäß Anspruch 1 enthält.

**10.** Spirocyclische Borsäureester der allgemeinen Formel I

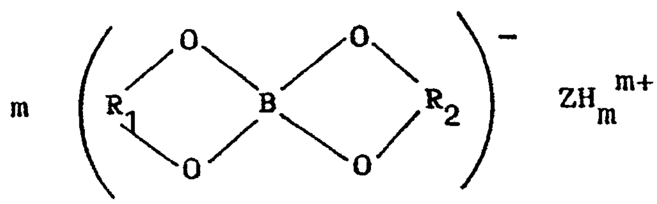 I

worin R1 und R2 entweder unabhängig voneinander zweiwertige Reste von Pentiten oder Hexiten oder gemeinsam den vierwertigen Rest von Pentaerythrit, Z Guanidin, Piperazin oder Melamin und m eine ganze Zahl von 1 bis 3 bedeuten.